# EUROPEAN PATENT SPECIFICATION

(11) **EP 2 792 208 B1**
(45) Date of publication and mention of the grant of the patent: **25.03.2020**
(21) Application number: 11805320.6
(22) Date of filing: 12.12.2011
(51) Int. Cl.: H04W 88/08, H04B 10/25

(54) **EXTREMELY HIGH FREQUENCY (EHF) DISTRIBUTED ANTENNA SYSTEMS, AND RELATED COMPONENTS AND METHODS**
HÖCHSTFREQUENTE VERTEILTE ANTENNENSYSTEME SOWIE ZUGEHÖRIGE KOMPONENTEN UND VERFAHREN
SYSTÈMES ANTENNES DISTRIBUÉS À EXTRÊMEMENT HAUTE FRÉQUENCE (EHF), ET COMPOSANTS ET PROCÉDÉS CONNEXES

(43) Date of publication of application: 22.10.2014
(73) Proprietor: Corning Optical Communications LLC, Charlotte, NC 28216 (US)
(72) Inventor: GEORGE, Jacob, Horseheads, New York 14845 (US); NG'OMA, Anthony, Horseheads, New York 14845 (US); RUFFIN, Alranzo B., Painted Post, New York 14870 (US); SAUER, Michael, Corning, New York 14830 (US)
(74) Representative: Sturm, Christoph
(86) International application number: PCT/US2011/064428
(87) International publication number: WO 2013/089665

(56) References cited:
- US-A1- 2002 012 495
- US-A1- 2011 206 383
- MOHAMED N ET AL: "Millimeter-Wave Carrier Generation System for Radio over Fiber", HIGH CAPACITY OPTICAL NETWORKS AND ENABLING TECHNOLOGIES, 2008. HONET 2008. INTERNATIONAL SYMPOSIUM ON, IEEE, PISCATAWAY, NJ, USA, 18 November 2008 (2008-11-18), pages 111-115, XP031446262, ISBN: 978-1-4244-2960-8
- HUNG-CHANG CHIEN ET AL: "Optical Millimeter-Wave Generation and Transmission Without Carrier Suppression for Single and Multi-Band Wireless Over Fiber Applications", JOURNAL OF LIGHTWAVE TECHNOLOGY, IEEE SERVICE CENTER, NEW YORK, NY, US, vol. 28, no. 16, 15 August 2010 (2010-08-15), pages 2230-2237, XP011304090, ISSN: 0733-8724

## Description

### BACKGROUND

### Field of the Disclosure

The technology of the present disclosure relates to distribution of radio-frequency (RF) communications signals in distributed antenna system.

### Technical Background

Wireless customers are demanding digital data services such as streaming video signals. Concurrently, some wireless customers use their wireless devices in areas that are poorly served by conventional cellular networks such as inside certain buildings or areas where there is little cellular coverage. One response to the intersection of these two concerns has been the use of distributed antenna systems, which are especially effective at providing wireless digital data services within a building. Such distributed antenna systems may use Wireless Fidelity (WiFi) or wireless local area networks (WLANs) to help provide digital data services.

However, WiFi and WLAN-based technology may not be able to provide sufficient bandwidth for expected demand, especially as high definition (HD) video becomes more prevalent. As an example, people want to upload or download HD video on their mobile devices and current standards do not allow this without substantial degradation to the quality of the video.

A base unit having downlink functionality only is disclosed by US 2011/206383 A1. Other prior art is known from US 2002/012495 A1.

### SUMMARY OF THE DETAILED DESCRIPTION

Embodiments disclosed in the detailed description include extremely high frequency (EHF) (i.e., 30-300 GHz), distributed antenna systems, and related components, and methods. The systems disclosed herein can support provision of digital data services to wireless clients. The use of the EHF band allows for the use of channels having a higher bandwidth, which in turn allows more data intensive signals to be communicated without substantial degradation to the quality of the video. As a non-limiting example, the distributed antenna systems disclosed herein may operate at an EHF of approximately 60 GHz with approximately 7 GHz bandwidth channels to provide greater bandwidth to digital data services. The distributed antenna systems disclosed herein may be well suited to be deployed in an indoor building or other facility for delivering of digital data services.

In this regard, the invention provides a base unit for distributing EHF modulated data signals to at least one remote antenna unit (RAU) according to claim 1.

The invention further provides a method for distributing EHF modulated data signals to at least one RAU according to claim 9.

Non-limiting examples of digital data services include, but are not limited to Ethernet, WLAN, Worldwide Interoperability for Microwave Access (WiMax), Wireless Fidelity (WiFi), Digital Subscriber Line (DSL), Long Term Evolution (LTE), and high definition television signals, etc. Further, as a non-limiting example, the distributed antenna system may be an optical fiber-based distributed antenna system, but such is not required. The embodiments disclosed herein are also applicable to other remote antenna clusters and distributed antenna systems, including those that include other forms of communications media for distribution of communications signals, including electrical conductors and wireless transmission. The embodiments disclosed herein may also be applicable to remote antenna clusters and distributed antenna systems and may also include more than one communications media for distribution of communications signals (e.g., digital data services, RF communications services).

Additional features and advantages will be set forth in the detailed description which follows, and in part, will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a schematic of an exemplary conventional distributed antenna system;
**FIG. 2** is a schematic diagram of an exemplary distributed antenna system having a downlink the extremely high frequency band;
**FIG. 3** is graph of just noticeable difference versus transmitted power for various distances showing performance profiles for various possible embodiments;
**FIG. 4** is a schematic diagram of an alternate exemplary distributed antenna system having two data input sources;
**FIG. 5** is a schematic diagram of an alternate exemplary system having a plurality of remote antenna units;
**FIG. 6** is a schematic diagram of an exemplary system with an uplink connection;
**FIGS. 7A** & **7B** illustrate alternate methodologies for combining multiple data inputs;
**FIG. 8** illustrates an exemplary distributed antenna system within a building;
**FIG. 9** illustrates an exemplary alternate embodiment using an outdoor high definition input; and
**FIG. 10** is a schematic diagram of a generalized representation of an exemplary computer system that can be included in any of the digital data sources, remote antenna units, client devices and/or other modules provided in the exemplary distributed antenna systems and/or their components described herein, wherein the exemplary computer system is adapted to execute instructions from an exemplary computer readable medium.

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather these embodiments are provided so that this disclosure will satisfy applicable legal requirements. Whenever possible, like reference numbers will be used to refer to like components or parts.

Embodiments disclosed in the detailed description include extremely high frequency (EHF) (i.e., 30-300 GHz) distributed antenna systems, and related components, and methods. The systems disclosed herein can support provision of digital data services to wireless clients. The use of the EHF band allows for the use of channels having a higher bandwidth, which in turn allows more data intensive signals, such as uncompressed high definition (HD) video to be communicated without substantial degradation to the quality of the video. As a non-limiting example, the distributed antenna systems disclosed herein may operate at approximately sixty (60) GHz with approximately seven (7) GHz bandwidth channels to provide greater bandwidth to digital data services. The distributed antenna systems disclosed herein may be well suited to be deployed in an indoor building or other facility for delivering of digital data services.

In this regard, in one exemplary system a base unit for distributing EHF modulated data signals to at least one remote antenna unit (RAU) is disclosed. The base unit comprises a downlink data source input configured to receive a downlink electrical data signal from a data source. The base unit further comprises an electrical-to-optical (E-O) converter configured to convert the downlink electrical data signal into a downlink optical data signal. The base unit further comprises an oscillator configured to generate an electrical carrier signal at a center frequency in the EHF band. The base unit further comprises a modulator. The modulator is configured to combine the downlink optical data signal with the electrical carrier signal to form a downlink modulated optical signal comprising the downlink optical data signal modulated at the center frequency of the electrical carrier signal. The modulator is further configured to send the downlink modulated optical signal to at least one RAU.

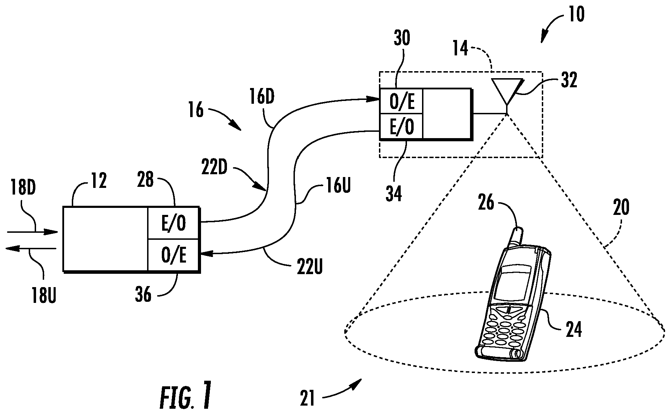

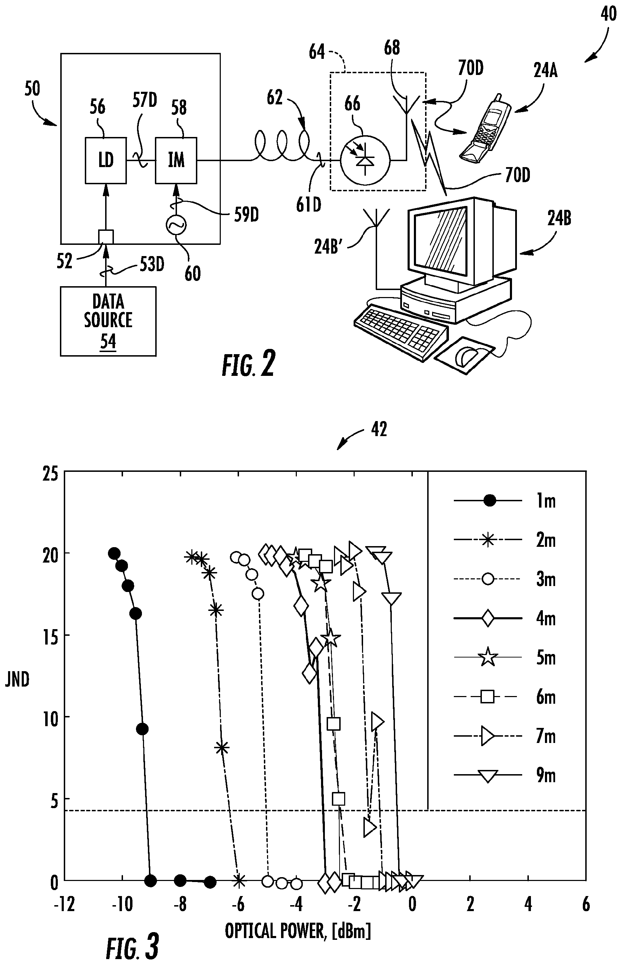

Before discussing examples of EHF radio over fiber systems, components, and methods that support provision of digital data services to wireless clients starting at **FIG. 2****,** an exemplary distributed antenna system is described with regards to **FIG. 1****.** The distributed antenna system **10** of **FIG. 1** allows for distribution of radio frequency (RF) communications signals; however, the distributed antenna systems are not limited to distribution of RF communications signals. Also note that while the distributed antenna system in **FIG. 1** discussed below includes distribution of communications signals over optical fiber, these distributed antenna systems are not limited to distribution over optical fiber. Distribution media could also include, but are not limited to, coaxial cable, twisted-pair conductors, wireless transmission and reception, and any combination thereof. Also, any combination can be employed that also involves optical fiber for portions of the distributed system.

In this regard, **FIG. 1** is a schematic diagram of a conventional distributed antenna system **10.** The distributed antenna system **10** is an optical fiber-based distributed antenna system. The distributed antenna system **10** is configured to create one or more antenna coverage areas for establishing communications with wireless client devices located in the RF range of the antenna coverage areas. In an exemplary embodiment, the distributed antenna system 10 may provide RF communication services (e.g., cellular services). As illustrated, the distributed antenna system **10** includes head-end equipment (HEE) **12** such as a head-end unit (HEU), one or more RAU **14,** and an optical fiber **16** that optically couples the HEE **12** to the RAU **14.** The RAU **14** is a type of remote communications unit. In general, a remote communications unit can support wireless communications or wired communications, or both. The HEE **12** is configured to receive communications over downlink electrical RF signals **18D** from a source or sources, such as a network or carrier as examples, and provide such communications to the RAU **14.** The HEE **12** is also configured to return communications received from the RAU **14,** via uplink electrical RF signals **18U,** back to the source or sources. In this regard, in this embodiment, the optical fiber **16** includes at least one downlink optical fiber **16D** to carry signals communicated from the HEE **12** to the RAU **14** and at least one uplink optical fiber **16U** to carry signals communicated from the RAU **14** back to the HEE **12.**

One downlink optical fiber **16D** and one uplink optical fiber **16U** could be provided to support full-duplex multiple channels each using wave-division multiplexing (WDM), as discussed in U.S. Patent Application Serial No. 12/892,424, entitled "Providing Digital Data Services in Optical Fiber-based Distributed Radio Frequency (RF) Communications Systems, And Related Components and Methods,". Other options for WDM and frequency-division multiplexing (FDM) are also disclosed in U.S. Patent Application Serial No. 12/892,424, any of which can be employed in any of the embodiments disclosed herein. Further, U.S. Patent Application Serial No. 12/892,424 also discloses distributed digital data communications signals in a distributed antenna system which may also be distributed in the distributed antenna system **10** either in conjunction with RF communications signals or not.

The distributed antenna system **10** has an antenna coverage area **20** that can be disposed about the RAU **14.** The antenna coverage area **20** of the RAU **14** forms an RF coverage area **21.** The HEE **12** is adapted to perform or to facilitate any one of a number of Radio-over-Fiber (RoF) applications, such as RF identification (RFID), wireless local-area network (WLAN) communication, or cellular phone service. Shown within the antenna coverage area **20** is a client device **24** in the form of a mobile device as an example, which may be a cellular telephone as an example. The client device **24** can be any device that is capable of receiving RF communications signals. The client device **24** includes an antenna **26** (e.g., a wireless card) adapted to receive and/or send electromagnetic RF signals.

With continuing reference to **FIG. 1****,** to communicate the electrical RF signals over the downlink optical fiber **16D** to the RAU **14,** to in turn be communicated to the client device **24** in the antenna coverage area **20** formed by the RAU **14,** the HEE **12** includes a radio interface in the form of an electrical-to-optical (E-O) converter **28.** The E-O converter **28** converts the downlink electrical RF signals **18D** to downlink optical RF signals **22D** to be communicated over the downlink optical fiber **16D.** The RAU **14** includes an optical-to-electrical (O-E) converter **30** to convert the received downlink optical RF signals **22D** back to electrical RF signals to be communicated wirelessly through an antenna **32** of the RAU **14** to client device **24** located in the antenna coverage area **20.**

Similarly, the antenna **32** is also configured to receive wireless RF communications from client device **24** in the antenna coverage area **20.** In this regard, the antenna **32** receives wireless RF communications from client device **24** and communicates electrical RF signals representing the wireless RF communications to an E-O converter **34** in the RAU **14.** The E-O converter **34** converts the electrical RF signals into uplink optical RF signals **22U** to be communicated over the uplink optical fiber **16U.** An O-E converter **36** provided in the HEE **12** converts the uplink optical RF signals **22U** into uplink electrical RF signals, which can then be communicated as uplink electrical RF signals **18U** back to a network or other source.

As noted, one or more of the network or other sources can be a cellular system, which may include a base station or base transceiver station (BTS). The BTS may be provided by a second party such as a cellular service provider, and can be co-located or located remotely from the HEE **12.**

In a typical cellular system, for example, a plurality of BTSs are deployed at a plurality of remote locations to provide wireless telephone coverage. Each BTS serves a corresponding cell and when a mobile client device enters the cell, the BTS communicates with the mobile client device. Each BTS can include at least one radio transceiver for enabling communication with one or more subscriber units operating within the associated cell. As another example, wireless repeaters or bi-directional amplifiers could also be used to serve a corresponding cell in lieu of a BTS. Alternatively, radio input could be provided by a repeater, picocell, or femtocell as other examples. In a particular exemplary embodiment, cellular signal distribution in the frequency range from 400 MHz to 2.7 GHz is supported by the distributed antenna system **10.**

It may be desirable to provide distributed antenna systems that provide digital data services for client devices. For example, it may be desirable to provide digital data services to client devices located within a distributed antenna system. Wired and wireless devices may be located in the building infrastructures that are configured to access digital data services. Examples of digital data services include, but are not limited to, Ethernet, WLAN, WiMax, WiFi, DSL, and LT, etc. Ethernet standards could be supported, including but not limited to 100 Mb/s (i.e., fast Ethernet) or Gigabit (Gb) Ethernet, or ten Gigabit (10G) Ethernet. Examples of digital data services include, but are not limited to, wired and wireless servers, wireless access points (WAPs), gateways, desktop computers, hubs, switches, remote radio heads (RRHs), baseband units (BBUs), and femtocells. A separate digital data services network can be provided to provide digital data services to digital data devices.

It may also be desired to provide high-speed wireless digital data service connectivity with RAUs in a distributed antenna system. One example would be WiFi. WiFi was initially limited in data rate transfer to 12.24 Mb/s and is provided at data transfer rates of up to 54 Mb/s using WLAN frequencies of 2.4 GHz and 5.8 GHz. While interesting for many applications, WiFi has proven to have too small a bandwidth to support real time downloading of uncompressed high definition (HD) television signals to wireless client devices. To increase data transfer rates, the frequency of wireless signals could be increased to provide larger channel bandwidth. For example, an extremely high frequency in the range of 30 GHz to 300 GHz could be employed. For example, the sixty (60) GHz spectrum is an EHF that is an unlicensed spectrum by the Federal Communications Commission (FCC) and that could be employed to provide for larger channel bandwidths. However, high frequency wireless signals are more easily attenuated or blocked from traveling through walls or other building structures where distributed antenna systems are installed.

In this regard, **FIG. 2** provides an exemplary distributed antenna system 40 that is configured to support broad band digital data services such as streaming HD video. In this regard, the distributed antenna system 40 includes a base unit **50.** The base unit **50** has a downlink data source input **52** configured to receive a downlink data signal **53D** from a data source **54.** In an exemplary embodiment, the downlink data signal **53D** is an electrical signal, although it could be optical, wireless, or in some other format as desired. In a further exemplary embodiment, the data source **54** is a high definition (HD) video data source and the downlink data signal **53D** is a HD video signal. The data source **54** may be local or remote from the base unit **50.** The base unit **50** receives the downlink data signal **53D** through the downlink data source input **52** and converts the downlink data signal **53D** to an optical signal using an E-O converter **56.** In an exemplary embodiment, the E-O converter **56** may be a laser diode (LD) to form a downlink optical data signal **57D.** In another exemplary embodiment, the E-O converter **56** may be a Mach-Zehnder electro-optic device.

With continuing reference to **FIG. 2****,** the downlink optical data signal **57D** is passed to an intensity modulator (IM) **58,** which also receives an electrical carrier signal **59D** from a local oscillator **60.** The electrical carrier signal **59D** is, in an exemplary embodiment, in the extremely high frequency range (i.e., 30 GHz - 300 GHz) and in a further embodiment is approximately sixty (60) GHz. While **FIG. 2** illustrates the local oscillator **60** as being positioned within the base unit **50,** in an alternate embodiment, the local oscillator **60** may be remotely positioned. The intensity modulator **58** modulates the downlink optical data signal **57D** with the electrical carrier signal **59D** to create a downlink modulated optical signal **61D.** The base unit **50** sends the downlink modulated optical signal **61D** through an optical fiber **62** to one or more RAUs **64** (only one illustrated).

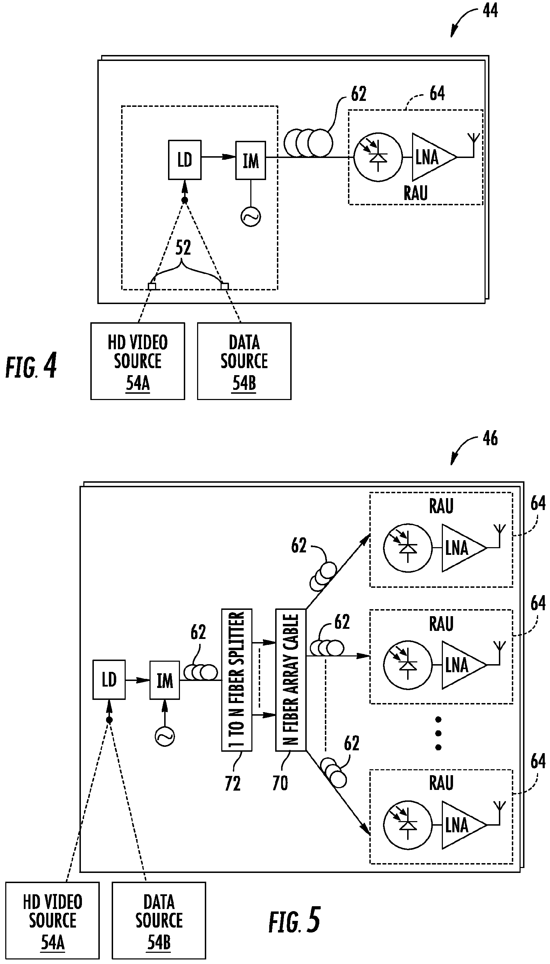

With continuing reference to **FIG. 2****,** the RAU **64** receives the downlink modulated optical signal **61D** and converts the downlink modulated optical signal **61D** to a downlink modulated electromagnetic signal **70D** using an optical-to-electrical (O-E) converter **66,** which, in an exemplary embodiment, is a photodiode. The downlink modulated electromagnetic signal **70D** is then transmitted through an antenna **68** to one or more client devices **24** such as a mobile terminal **24A** or a wireless enabled computer **24B.** While not illustrated in **FIG. 2****,** but illustrated in **FIG. 4****,** the RAU **64** may include a low noise amplifier (LNA) to boost the signal prior to transmission through the antenna **68.** In an exemplary embodiment, the wireless enabled computer **24B** is equipped with an antenna **24B'** to facilitate reception of the downlink modulated electromagnetic signal **70D** as is well understood.

In the client device **24,** the downlink modulated electromagnetic signal **70D** is downconverted using a local oscillator operating at the carrier frequency, and the downlink data signal **53D** is recovered and used as desired within the client device **24.**

By providing the downlink modulated optical signal **61D** in this manner, the downlink modulated electromagnetic signal **70D** is also in the EHF band. Because of the nature of the distributed antenna system, the distance between the client device **24** and the RAU **64** is relatively small (e.g., < 10 meters). Because typical channel width in the sixty (60) GHz range is seven (7) GHz, there is sufficient bandwidth to accommodate large data files or streaming data such as a HD video signal.

Empirical testing also indicates that this system performs better than a directly-modulated mm-wave radio over fiber system because the frequency response is dominated by the low-frequency response of the O-E converter **56.** The high-speed modulator only impacts the link efficiency, and its frequency response has no impact on the overall frequency response of the link. Further, empirical testing reveals that no optical signal filtering is required for fiber spans in the range of five hundred (500) meters, which should be sufficient for most distributed antenna systems. Further note that in the broadcast mode, no uplink signal is required. Thus, conventional receivers could be eliminated from the base unit **50** and the RAU **64** if desired for such a system.

In specific exemplary testing, an uncompressed HD video signal was sent at various optical power levels, and the video quality at the client device **24** was evaluated using the just noticeable difference (JND) values. The results of this testing are presented as graph 42 in **FIG. 3****.** It is generally accepted that JND values below 5 are considered acceptable. As is apparent from the data in **FIG. 3****,** it is not difficult to achieve acceptable video signal transmission at ranges often meters from the RAU **64** at acceptable power levels.

**FIG. 4** illustrates an alternate embodiment of a distributed antenna system 44 configured to support and distribute EHF communications signals. In this embodiment, the distributed antenna system 44 is configured to receive data input from a plurality of sources. In this regard, the downlink data source input **52** is configured to receive data input from a plurality of sources **54** such as HD video source **54A** and data source **54B.** The plurality of data sources **54** may be accommodated by having multiple ports on the base unit 50 or by having a combiner combine the signals from the data sources **54** into a single signal for the base unit **50.** Further, in **FIG. 4****,** the downlink data is provided on a single optical fiber **62.**

An alternate embodiment of a distributed antenna system 46 is illustrated in **FIG. 5****,** wherein a plurality of optical fibers **62** is used so that a plurality of RAU **64** may receive optical signals. This arrangement allows a plurality of RAU 64 to receive optical signals. In an exemplary embodiment, the plurality of optical fibers **62** are arranged in an array cable **70,** such as is used for in-building distribution of RAUs **64.** A 1-to-N fiber splitter **72** may be used to separate the signals as desired onto the array cable **70.**

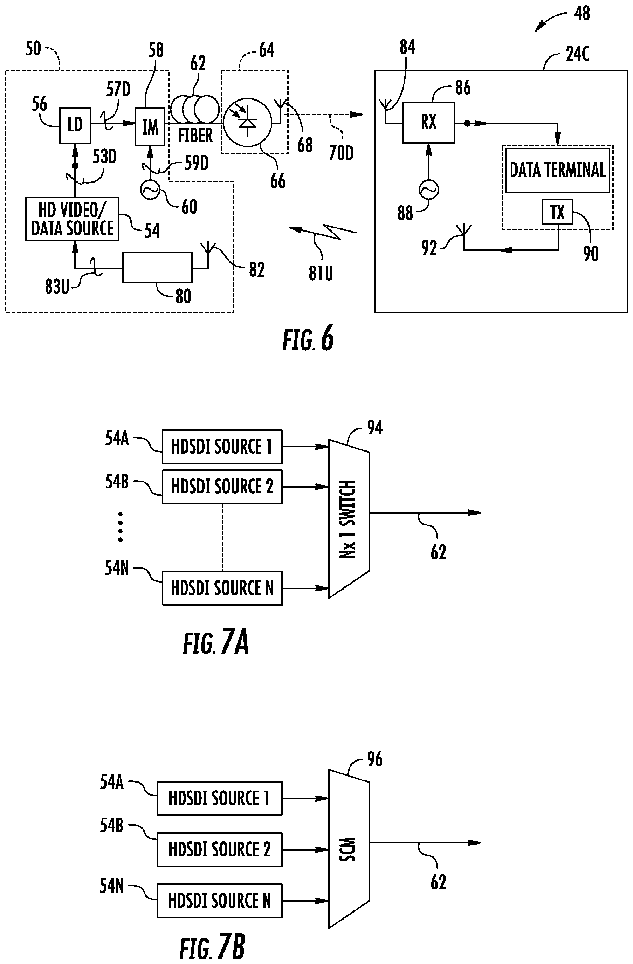

**FIG. 6** illustrates another alternate embodiment of a distributed antenna system 48 configured to support and distribute EHF communications signals. In this embodiment, there is an uplink connection from the remote client so as to allow bi-directional communication. That is, there is an uplink connection between the client device **24** and the base unit **50.** In an exemplary embodiment, the uplink occurs at a substantially lower frequency than the downlink frequency. Because EHF operation may be power intensive and because the uplink signals typically do not contain large data packets, the uplink communications do not need to take place in the EHF band. Thus, conventional WiFi, WLAN, BLUETOOTH®, or other comparatively low frequency technologies may be used for the uplink signal.

In practice, the base unit **50** remains largely unchanged, but a receiver **80** is added. The receiver **80** may be positioned within the base unit **50** (illustrated), within an RAU **64** (not illustrated), or positioned remotely from the base unit **50** and the RAU **64,** as desired. The receiver **80** is configured to receive uplink signal **81U** through an antenna **82.** The receiver **80** may further pass an uplink signal **83U** to the data source **54,** or other element within the system as desired.

Similarly, the client device **24C** remains essentially unchanged on the downlink side from the previously described client device **24** in that the wireless client **24C** receives the downlink modulated electromagnetic signal **70D** through an antenna **84** with an EHF (e.g., 60 GHz) receiver **86,** and downconverts the EHF signal using a local oscillator **88** and manipulates the embedded data as desired (e.g., plays HD video on a display). However, the client device **24C** also includes a wireless transmitter **90,** which transmits the uplink signal **81U** through an antenna **92.** Because EHF operation may be power intensive and because the uplink signals typically do not contain large data packets, the uplink communications do not need to take place in the EHF band. Thus, conventional WiFi, WLAN, BLUETOOTH®, or other comparatively low frequency technologies may be used for the uplink signal. As used herein the term "substantially lower than 60 GHz" or "substantially lower than EHF" is defined to be a frequency lower than 15 GHz. It should be appreciated that if there are multiple wireless clients **24** sending uplink signals **81U,** then the receiver **80** is configured to receive such plurality of signals.

**FIGS. 7A** and **7B** illustrate two alternate ways that multiple data signals may be multiplexed onto the single optical fiber **62** of the previous embodiments. In **FIG. 7A****,** a Nxl switch **94** allows 1-to-N data sources **54A-54N** to be coupled to the optical fiber **62.** In **FIG. 7B****,** a sub carrier multiplexing (SCM) switch **96** may be used. Still other techniques may be used as desired. Note that with 7 GHz channels, as a non-limiting example, it may be possible to have three (3) uncompressed HD video sources as inputs.

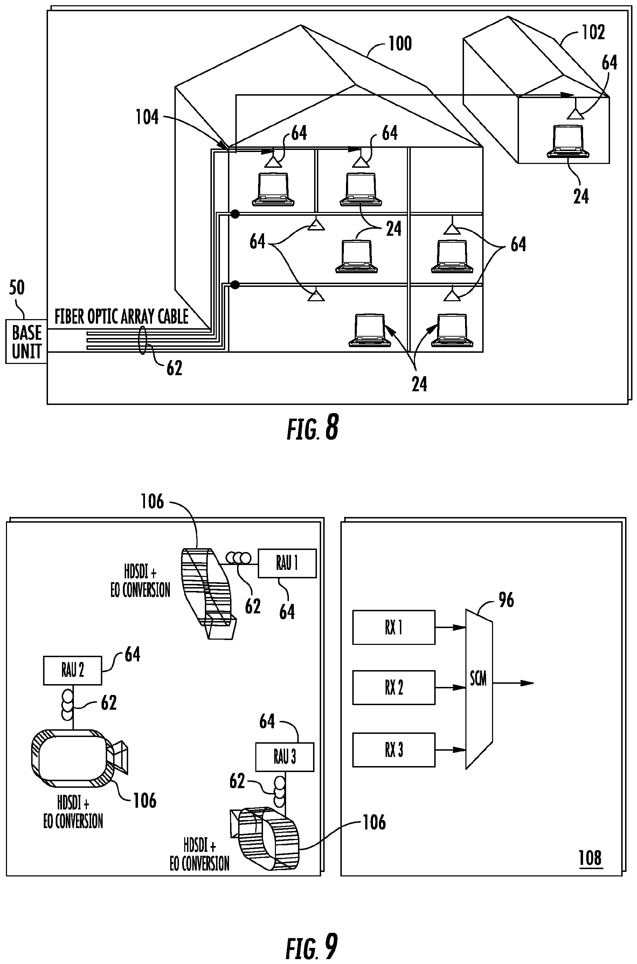

The system of the present disclosure has numerous applications, two of which are explicitly set forth with reference to **FIGS. 8** and **9****.** In **FIG. 8****,** a distributed antenna system according to the present disclosure, such as systems **40, 44, 46,** or **48** can be configured to support and distribute EHF communications signals. In this embodiment, the system is installed in a building **100** and an outbuilding **102** so that remote clients may receive RF communications signals. A fiber optic cable **62** is an array cable and is coupled to a base unit **50** which may be positioned outside or remote from the building **100.** The optical fiber **62** is connected to a plurality of RAUs **64** distributed throughout the building **100** and outbuilding **102.** A splitter **104** allows the optical fiber **62** to be split as desired to extend the run to the outbuilding **102.** A plurality of clients devices **24** are positioned within range of the RAUs **64** and can stream HD video signals or other data signals as desired. In this manner, users of client devices **24** may receive broad band digital data signals such as HD video signals despite the presence of the walls of the building 100 or outbuilding 102 which might otherwise attenuate such signals.

In **FIG. 9****,** a plurality of HD cameras **106** are effectively base units, coupled via respective optical fibers **62** to respective RAUs **64.** The RAUs **64** transmit the signal to a processing station **108.** As illustrated, the processing station **108** receives the three illustrated signals and combines them using a SCM **96,** and conveys the combined signal to circuitry where the signals may be manipulated. Thus, the concepts of the present disclosure can be metaphorically inverted such that instead of downloading broad band digital data to a remote client, a plurality of remote cameras **106** may upload broadband digital data (e.g., an HD video signal) to a processing station **108.**

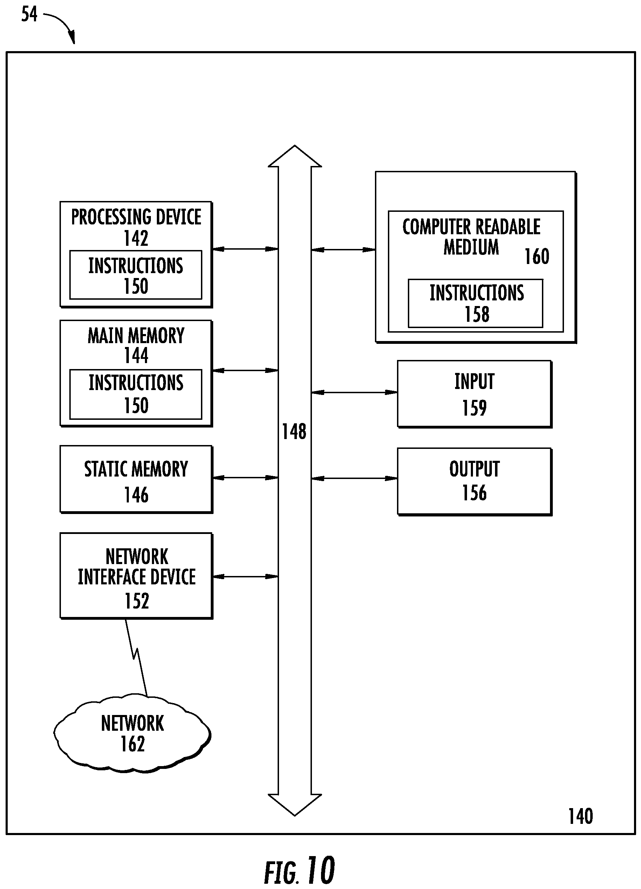

**FIG. 10** is a schematic diagram representation of additional detail regarding an exemplary RAU **64,** client device **24** and/or elements adapted to execute instructions from an exemplary computer-readable medium to perform the location services described herein. In this regard, the RAU **64** or other element may include a computer system **140** within which a set of instructions for performing any one or more of the location services discussed herein may be executed. The computer system **140** may be connected (e.g., networked) to other machines in a LAN, an intranet, an extranet, or the Internet. The computer system **140** may operate in a client-server network environment, or as a peer machine in a peer-to-peer (or distributed) network environment. While only a single device is illustrated, the term "device" shall also be taken to include any collection of devices that individually or jointly execute a set (or multiple sets) of instructions to perform any one or more of the methodologies discussed herein. The computer system **140** may be a circuit or circuits included in an electronic board card, such as a printed circuit board (PCB) as an example, a server, a personal computer, a desktop computer, a laptop computer, a personal digital assistant (PDA), a computing pad, a mobile device, or any other device, and may represent, for example, a server or a user's computer.

The exemplary computer system **140** in this embodiment includes a processing device or processor **142,** a main memory **144** (e.g., read-only memory (ROM), flash memory, dynamic random access memory (DRAM) such as synchronous DRAM (SDRAM), etc.), and a static memory **146** (e.g., flash memory, static random access memory (SRAM), etc.), which may communicate with each other via the data bus **148.** Alternatively, the processing device **142** may be connected to the main memory **144** and/or static memory **146** directly or via some other connectivity means. The processing device **142** may be a controller, and the main memory **144** or static memory **146** may be any type of memory.

The processing device **142** represents one or more general-purpose processing devices such as a microprocessor, central processing unit, or the like. More particularly, the processing device **142** may be a complex instruction set computing (CISC) microprocessor, a reduced instruction set computing (RISC) microprocessor, a very long instruction word (VLIW) microprocessor, a processor implementing other instruction sets, or processors implementing a combination of instruction sets. The processing device **142** is configured to execute processing logic in instructions **150** for performing the operations and steps discussed herein.

The computer system **140** may further include a network interface device **152.** The computer system **140** also may or may not include an input **154** to receive input and selections to be communicated to the computer system **140** when executing instructions. The computer system **140** also may or may not include an output **156,** including but not limited to a display, a video display unit (e.g., a liquid crystal display (LCD) or a cathode ray tube (CRT)), an alphanumeric input device (e.g., a keyboard), and/or a cursor control device (e.g., a mouse).

The computer system **140** may or may not include a data storage device that includes instructions **158** stored in a computer-readable medium **160.** The instructions **158** may also reside, completely or at least partially, within the main memory **144** and/or within the processing device **142** during execution thereof by the computer system **140,** the main memory **144** and the processing device **142** also constituting computer-readable medium. The instructions **158** may further be transmitted or received over a network **162** via the network interface device **152.**

While the computer-readable medium **160** is shown in an exemplary embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any medium that is capable of storing, encoding, or carrying a set of instructions for execution by the processing device and that cause the processing device to perform any one or more of the methodologies of the embodiments disclosed herein. The term "computer-readable medium" shall accordingly be taken to include, but not be limited to, solid-state memories, optical and magnetic medium, and carrier wave signals.

The embodiments disclosed herein include various steps. The steps of the embodiments disclosed herein may be formed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product, or software, that may include a machine-readable medium (or computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes a machine-readable storage medium (e.g., ROM, random access memory ("RAM"), magnetic disk storage medium, optical storage medium, flash memory devices, etc.), a machine readable transmission medium (electrical, optical, acoustical, or other form of propagated signals (e.g., carrier waves, infrared signals, digital signals, etc.)), etc.

Unless specifically stated otherwise as apparent from the previous discussion, it is appreciated that throughout the description, discussions utilizing terms such as "processing," "computing," "determining," "displaying," or the like refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The algorithms and displays presented herein are not inherently related to any particular computer or other apparatus. Various systems may be used with programs in accordance with the teachings herein, or it may prove convenient to construct more specialized apparatuses to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

Those of skill in the art would further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The components of the distributed antenna systems described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends on the particular application, design choices, and/or design constraints imposed on the overall system. Skilled artisans may implement the described functionality in varying ways for each particular application, but such implementation decisions should not be interpreted as causing a departure from the scope of the present embodiments.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA), or other programmable logic device, discrete gate or transistor logic, discrete hardware components, or any combination thereof designed to perform the functions described herein. A controller may be a processor. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. Those of skill in the art would also understand that information and signals may be represented using any of a variety of technologies and techniques. For example, data, instructions, commands, information, signals, bits, symbols, and chips that may be references throughout the above description may be represented by voltages, currents, electromagnetic waves, magnetic fields, or particles, optical fields or particles, or any combination thereof.

Further, as used herein, it is intended that terms "fiber optic cables" and/or "optical fibers" include all types of single mode and multi-mode light waveguides, including one or more optical fibers that may be upcoated, colored, buffered, ribbonized, and/or have other organizing or protective structure in a cable such as one or more tubes, strength members, jackets, or the like. The optical fibers disclosed herein can be single mode or multi-mode fibers. Likewise, other types of suitable optical fibers include bend-insensitive optical fibers, or any other expedient of a medium for transmitting light signals. An example of a bend-insensitive, or bend resistant, optical fiber is ClearCurve® Multimode fiber commercially available from Corning Incorporated. Suitable fibers of this type are disclosed, for example, in U.S. Patent Application Publication Nos. 2008/0166094 and 2009/0169163.

Many modifications and other embodiments of the embodiments set forth herein will come to mind to one skilled in the art to which the embodiments pertain having the benefit of the teachings presented in the forgoing descriptions and the associated drawings.

Therefore, it is to be understood that the description and claims are not to be limited to the specific embodiments disclosed, and that modifications and other embodiments are intended to be included within the scope of the appended claims. It is intended that the embodiments cover the modifications and variations of the embodiments provided they come within the scope of the appended claims. Although specific terms are employed herein, they are used in a generic and descriptive sense only and not for purposes of limitation.

## Claims

1. A base unit (50) for distributing extremely high frequency, EHF, modulated data signals to at least one remote antenna unit (64), comprising:
a downlink data source input (52) configured to receive a downlink electrical data signal (53D) from a data source (54);
an electrical-to-optical converter (56) configured to convert the downlink electrical data signal (53D) into a downlink optical data signal (57D);
an oscillator (60) configured to generate an electrical carrier signal (59D) at a center frequency in an extremely high frequency, EHF, band;
a modulator configured to combine the downlink optical data signal (57D) with the electrical carrier signal (59D) to form a downlink modulated optical signal (61D) comprising the downlink optical data signal modulated at the center frequency of the electrical carrier signal, the modulator (58) further configured to send the downlink modulated optical signal (61D) to at least one remote antenna unit (64); and
an uplink receiver (80) having an antenna (82), wherein the uplink receiver (80) is adapted to operate at a frequency substantially lower than the extremely high frequency band to receive uplink signals (81U) from a remote wireless client (24C) through the antenna (82).

2. The base unit of claim 1, wherein the data source (54) is remote from the downlink data source input (52).

3. The base unit according to any of the preceding claims, wherein the downlink data source input (52) is configured to receive a high definition video signal.

4. The base unit according to any of the preceding claims, wherein the electrical carrier signal (29D) operates at approximately 60 GHz, and wherein the uplink receiver (80) is adapted to operate at the frequency substantially lower than 60 GHz to receive the signals from the remote client (24C).

5. The base unit according to any of the preceding claims, wherein the uplink receiver (80) operates according to a Wireless Fidelity, BLUETOOTH defined protocol, or other frequency lower than extremely high frequency.

6. The base unit according to any of the preceding claims, wherein the downlink data source input (52) is configured to receive input from a plurality of downlink data sources (54).

7. The base unit according to any of the preceding claims, wherein the electrical-to-optical converter (56) comprises a laser diode.

8. The base unit according to any of the preceding claims, wherein the modulator comprises an intensity modulator (58).

9. A method for distributing extremely high frequency, EHF, modulated data signals to at least one remote antenna unit, comprising:
receiving a downlink electrical data signal (53D) from a downlink data source (54);
converting the downlink electrical data signal (53D) into a downlink optical data signal (57D);
combining the downlink optical data signal (57D) with an electrical carrier signal (59D) operating in an extremely high frequency, EHF, band to form a downlink modulated optical signal (61D) comprising the downlink optical data signal modulated at a center frequency of the electrical carrier signal (59D);
sending the downlink modulated optical signal (61D) from a base unit (50) to at least one remote antenna unit (64);
receiving an uplink signal (81U) from a wireless client (24C) at the base unit (50) through an uplink receiver (80) having an antenna (82), wherein receiving the uplink signal (81U) from the wireless client comprises receiving an uplink signal (81U) at a frequency substantially lower than the extremely high frequency band.

10. The method of claim 9, further comprising converting the downlink modulated optical signal (61D) to a downlink electromagnetic signal (70D) at the remote antenna unit (64) and sending the downlink electromagnetic signal (70D) to the wireless client (24C).

11. The method of claim 9, wherein receiving the uplink signal (81U) from the wireless client (24C) comprises receiving a Wireless Fidelity or BLUETOOTH uplink signal.

12. The method according to any of the preceding method claims, wherein receiving the downlink electrical data signal (53D) from the downlink data source (54) comprises receiving a high definition video signal.

13. The method according to any of the preceding method claims, wherein the electrical carrier signal (59D) comprises a signal at approximately 60 GHz.

## Patentansprüche

1. Basiseinheit (50) zum Verteilen von höchstfrequenzmodulierten Datensignalen, EHF-modulierten Datensignalen, an mindestens eine entfernte Antenneneinheit (64), die Folgendes aufweist:
einen Abwärtsstreckendatenquelleneingang (52), der ausgestaltet ist, ein elektrisches Abwärtsstreckendatensignal (53D) von einer Datenquelle (54) zu empfangen;
einen Elektrisch/Optisch-Umsetzer (56), der ausgestaltet ist, das elektrische Abwärtsstreckendatensignal (53D) in ein optisches Abwärtsstreckendatensignal (57D) umzusetzen;
einen Oszillator (60) der ausgestaltet ist, ein elektrisches Trägersignal (59D) bei einer Mittenfrequenz in einem Höchstfrequenzband, EHF-Band, zu erzeugen;
einen Modulator, der ausgestaltet ist, das optische Abwärtsstreckendatensignal (57D) mit dem elektrischen Trägersignal (59D) zu vereinigen, um ein moduliertes optisches Abwärtsstreckensignal (61D) zu bilden, das das optische Abwärtsstreckendatensignal, das bei der Mittenfrequenz des elektrischen Trägersignals moduliert wurde, aufweist, wobei der Modulator (58) ferner ausgestaltet ist, das modulierte optische Abwärtsstreckensignal (61D) an mindestens eine entfernte Antenneneinheit (64) zu senden, und
einen Aufwärtsstreckenempfänger (80) mit einer Antenne (82), wobei der Aufwärtsstreckenempfänger (80) ausgelegt ist, bei einer Frequenz zu arbeiten, die wesentlich niedriger als das Höchstfrequenzband ist, um Aufwärtsstreckensignale (81U) von einem entfernten drahtlosen Client (24C) durch die Antenne (82) zu empfangen.

2. Basiseinheit nach Anspruch 1, wobei die Datenquelle (54) von dem Abwärtsstreckendatenquelleneingang (52) entfernt ist.

3. Basiseinheit nach einem der vorhergehenden Ansprüche, wobei der Abwärtsstreckendatenquelleneingang (52) ausgestaltet ist, ein hochauflösendes Videosignal zu empfangen.

4. Basiseinheit nach einem der vorhergehenden Ansprüche, wobei das elektrische Trägersignal (29D) bei ungefähr 60 GHz arbeitet und wobei der Aufwärtsstreckenempfänger (80) ausgelegt ist, bei der Frequenz, die wesentlich niedriger als 60 GHz ist, zu arbeiten, um die Signale von dem entfernten Client (24C) zu empfangen.

5. Basiseinheit nach einem der vorhergehenden Ansprüche, wobei der Aufwärtsstreckenempfänger (80) gemäß einem "Wireless Fidelity", Bluetooth-definierten Protokoll oder einer anderen Frequenz, die niedriger als die Höchstfrequenz ist, arbeitet.

6. Basiseinheit nach einem der vorhergehenden Ansprüche, wobei der Abwärtsstreckendatenquelleneingang (52) ausgestaltet ist, eine Eingabe von mehreren Abwärtsstreckendatenquellen (54) zu empfangen.

7. Basiseinheit nach einem der vorhergehenden Ansprüche, wobei der Elektrisch-zu-optisch-Umsetzer (56) eine Laserdiode aufweist.

8. Basiseinheit nach einem der vorhergehenden Ansprüche, wobei der Modulator einen Stärkemodulator (58) aufweist.

9. Verfahren zum Verteilen von höchstfrequenzmodulierten Datensignalen, EHF-modulierten Datensignalen, an mindestens eine entfernte Antenneneinheit, das Folgendes aufweist:
Empfangen eines elektrischen Abwärtsstreckendatensignals (53D) von einer Abwärtsstreckendatenquelle (54);
Umsetzen des elektrischen Abwärtsstreckendatensignals (53D) in ein optisches Abwärtsstreckendatensignal (57D);
Vereinigen des optischen Abwärtsstreckendatensignals (57D) mit einem elektrischen Trägersignal (59D), das in einem Höchstfrequenzband, EHF-Band, arbeitet, um ein moduliertes optisches Abwärtsstreckensignal (61D) zu bilden, das das optische Abwärtsstreckendatensignal aufweist, das bei einer Mittenfrequenz des elektrischen Trägersignals (59D) moduliert wurde;
Senden des modulierten optischen Abwärtsstreckensignals (61D) von einer Basiseinheit (50) an mindestens eine entfernte Antenneneinheit (64);
Empfangen eines Aufwärtsstreckensignals (81U) von einem drahtlosen Client (24C) an der Basiseinheit (50) durch einen Aufwärtsstreckenempfänger (80) mit einer Antenne (82), wobei das Empfangen des Aufwärtsstreckensignals (81U) von dem drahtlosen Client aufweist, ein Aufwärtsstreckensignal (81U) bei einer Frequenz, die wesentlich niedriger als das Höchstfrequenzband ist, zu empfangen.

10. Verfahren nach Anspruch 9, das ferner umfasst, das modulierte optische Abwärtsstreckensignal (61D) in ein elektromagnetisches Abwärtsstreckensignal (70D) an der entfernten Antenneneinheit (64) umzusetzen und das elektromagnetische Abwärtsstreckensignal (70D) an den drahtlosen Client (24C) zu senden.

11. Verfahren nach Anspruch 9, wobei das Empfangen des Aufwärtsstreckensignals (81U) von dem drahtlosen Client (24C) das Empfangen eines "Wireless Fidelity"- oder Bluetooth-Aufwärtsstreckensignals umfasst.

12. Verfahren nach einem der vorhergehenden Verfahrensansprüche, wobei das Empfangen des elektrischen Abwärtsstreckendatensignals (53D) von der Abwärtsstreckendatenquelle (54) das Empfangen eines hochauflösenden Videosignals umfasst.

13. Verfahren nach einem der vorhergehenden Verfahrensansprüche, wobei das elektrische Trägersignal (59D) ein Signal bei ungefähr 60 GHz enthält.

## Revendications

1. Unité de base (50) pour la distribution de signaux de données modulés extrêmement haute fréquence, EHF, à au moins une unité d'antenne distante (64), comprenant :
une entrée de source de données sur voie descendante (52) configurée pour recevoir un signal électrique de données sur voie descendante (53D) en provenance d'une source de données (54) ;
un convertisseur électrique-optique (56) configuré pour convertir le signal électrique de données sur voie descendante (53D) en un signal optique de données sur voie descendante (57D) ;
un oscillateur (60) configuré pour générer un signal électrique de porteuse (59D) à une fréquence centrale dans une bande extrêmement haute fréquence, EHF ;
un modulateur configuré pour combiner le signal optique de données sur voie descendante (57D) au signal électrique de porteuse (59D) pour former un signal optique modulé sur voie descendante (61D) comprenant le signal optique de données sur voie descendante modulé à la fréquence centrale du signal électrique de porteuse, le modulateur (58) étant configuré en outre pour envoyer le signal optique modulé sur voie descendante (61D) à au moins une unité d'antenne distante (64) ; et
un récepteur sur voie montante (80) doté d'une antenne (82), le récepteur sur voie montante (80) étant adapté à fonctionner à une fréquence sensiblement plus basse que la bande extrêmement haute fréquence pour recevoir des signaux sur voie montante (81U) en provenance d'un client sans fil distant (24C) par le biais de l'antenne (82).

2. Unité de base selon la revendication 1, dans laquelle la source de données (54) est distante de l'entrée de source de données sur voie descendante (52).

3. Unité de base selon l'une quelconque des revendications précédentes, dans laquelle l'entrée de source de données sur voie descendante (52) est configurée pour recevoir un signal vidéo haute définition.

4. Unité de base selon l'une quelconque des revendications précédentes, dans lequel le signal électrique de porteuse (29D) fonctionne à environ 60 GHz, et dans lequel le récepteur sur voie montante (80) est adapté à fonctionner à la fréquence sensiblement plus basse que 60 GHz pour recevoir les signaux en provenance du client distant (24C).

5. Unité de base selon l'une quelconque des revendications précédentes, dans lequel le récepteur sur voie montante (80) fonctionne selon un protocole défini Wireless Fidelity, BLUETOOTH ou une autre fréquence plus basse qu'une extrêmement haute fréquence.

6. Unité de base selon l'une quelconque des revendications précédentes, dans lequel l'entrée de source de données sur voie descendante (52) est configurée pour recevoir une entrée en provenance d'une pluralité de sources de données sur voie descendante (54) .

7. Unité de base selon l'une quelconque des revendications précédentes, dans lequel le convertisseur électrique-optique (56) comprend une diode laser.

8. Unité de base selon l'une quelconque des revendications précédentes, dans lequel le modulateur comprend un modulateur d'intensité (58).

9. Procédé de distribution de signaux de données modulés extrêmement haute fréquence, EHF, à au moins une unité d'antenne distante, comprenant :
la réception d'un signal électrique de données sur voie descendante (53D) en provenance d'une source de données sur voie descendante (54) ;
la conversion du signal électrique de données sur voie descendante (53D) en un signal optique de données sur voie descendante (57D) ;
la combinaison du signal optique de données sur voie descendante (57D) à un signal électrique de porteuse (59D) fonctionnant dans une bande extrêmement haute fréquence, EHF, pour former un signal optique modulé sur voie descendante (61D) comprenant le signal optique de données sur voie descendante modulé à une fréquence centrale du signal électrique de porteuse (59D) ;
l'envoi du signal optique modulé sur voie descendante (61D) depuis une unité de base (50) à au moins une unité d'antenne distante (64) ; et
la réception d'un signal sur voie montante (81U) en provenance d'un client sans fil (24C) au niveau de l'unité de base (50) par le biais d'un récepteur sur voie montante (80) doté d'une antenne (82), la réception du signal sur voie montante (81U) en provenance du client sans fil comprenant la réception d'un signal sur voie montante (81U) à une fréquence sensiblement plus basse que la bande extrêmement haute fréquence.

10. Procédé selon la revendication 9, comprenant en outre la conversion du signal optique modulé sur voie descendante (61D) en un signal électromagnétique sur voie descendante (70D) au niveau de l'unité d'antenne distante (64) et l'envoi du signal électromagnétique sur voie descendante (70D) au client sans fil (24C).

11. Procédé selon la revendication 9, dans lequel la réception du signal sur voie montante (81U) en provenance du client sans fil (24C) comprend la réception d'un signal Wireless Fidelity ou BLUETOOTH sur voie montante.

12. Procédé selon l'une quelconque des revendications précédentes, dans lequel la réception du signal électrique de données sur voie descendante (53D) en provenance de la source de données sur voie descendante (54) comprend la réception d'un signal vidéo haute définition.

13. Procédé selon l'une quelconque des revendications précédentes, dans lequel le signal électrique de porteuse (59D) comprend un signal à environ 60 GHz.
